# EUROPEAN PATENT SPECIFICATION

(11) **EP 0 632 957 B1**
(45) Date of publication and mention of the grant of the patent: **17.01.2001**
(21) Application number: 94108129.1
(22) Date of filing: 26.05.1994
(51) Int. Cl.: A01N 25/00, A01N 25/34, A01N 51/00

(54) **A method of killing noxious insects**
Verfahren zur Bekämpfung von Schadinsekten
Procédé de lutte contre les insectes nuisibles

(30) Priority: 08.06.1993 JP 16333693
(43) Date of publication of application: 11.01.1995
(73) Proprietor: NIHON BAYER AGROCHEM K.K., Tokyo 108 (JP)
(72) Inventor: Kamochi, Atsumi, Kochi-shi, Kochi (JP); Yamashita, Nobuhiro, Kami-gun, Kochi (JP); Saito, Ikuya, Kochi-shi, Kochi (JP)
(74) Representative: Linkenheil, Dieter

(56) References cited:
- EP-A- 0 254 196
- EP-A- 0 564 945
- CHEMICAL ABSTRACTS, vol. 114, no. 23, 10 June 1991, Columbus, Ohio, US; abstract no. 223490h, 'Imidacloprid, a novel systemic nitromethylene analog insecticide for crop protection' & BRIGHTON CROP PROT. CONF.-PESTS DIS., no.1, 1990 pages 21 - 28

## Description

The present invention relates to a method of controlling insects, more particularly, to a method of controlling insects infesting fruit vegetables, flowers and ornamental plants.

The nitroimino and nitromethylene compounds disclosed in EP192060 A are compounds exhibiting ensured insecticidal activity at extremely low dosages as compared with the known organic phosphorus- and carbamate-series insecticides.

A method is already known in the art wherein unnecessary trees are killed with the use of chemical-immersed carriers or needle-like shaped materials inserted into their trunks (JP49055837 A and JP60224601 A).

Pesticides are used in various kinds of formulations, most of which are applied in the forms of emulsion, wettable powder, dust formulation and granules.

The conventional spraying and dusting applications pose a number of problems to be solved, such as soil residue and crop residue of higher or lower content of pesticides, hazardous chemical exposure and severe working conditions required during the application on the farmers, proliferation of chemicals in living environment, excessive application for retaining chemical effectiveness, working efficiency in application, etc.

The inventors of the present application have found a novel method capable of effectively controlling insects with ensured control effects.

Namely, a method has been provided for controlling insects infesting fruit vegetables, flowers and ornamental plants, which comprises applying pressure from outside onto and around their stalks and/or stem with the concave pinching surfaces of a pair of pliers which have been previously coated with an active compound, so as to make the surfaces of said stalks and/or stems absorb said active compound, wherein said active compound is represented by the following general formula 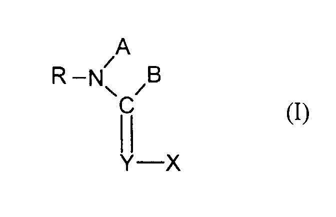 wherein
- R: represents hydrogen, acyl, alkyl or optionally substituted heteroarylalkyl,
- A: represents hydrogen, alkyl or a divalent group connected to B,
- B: represents alkyl, -S-R, 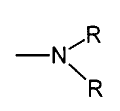 or a divalent group or atom connected to A, wherein R has the same meaning as mentioned above,
- Y: represents =N- or 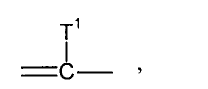 wherein
T¹ represents hydrogen or optionally substituted alkyl, and
X represents an electron withdrawing group.

The compounds represented by the general formula (I) according to the method of killing noxious insects of the present invention are already known from the following publications; Japanese Patent Applications JP60218386 A , JP61178981 A, JP 62081382 A , JP2-288859 A, JP 2-288860 A and JP 2-235881 A as well as WO 91/04965 A and EP 192060 A.

The method according to the present invention has surprisingly been found to be an extremely excellent method in that effective dosages of the active compounds are less than before with an ensured insecticide controlling effect being sustained for a long period of time and, regarding environmental pollution, the active compounds can be applied onto the plant bodies as such without affecting other plant bodies, without fear of soil residue of the active compounds, yet with optimum dosages thereof.

Preferred are active compounds represented by the general formula (I) in which
- R: represents hydrogen, formyl, C₁₋₄ alkylcarbonyl, benzoyl, C₁₋₄ alkylsulfonyl, C₁₋₆ alkyl, or optionally substituted heteroarylmethyl having up to six ring member atoms with at least one being a nitrogen atom and optionally another being a further hetero atom,
- A: represents hydrogen, C₁₋₆ alkyl, ethylene, trimethylene, or 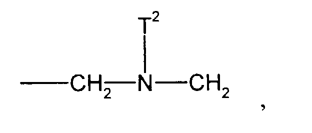 wherein
T² represents hydrogen, C₁₋₄ alkyl or C₁₋₄ alkylcarbonyl,
- B: represents C₁₋₆ alkyl, -S-R, 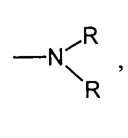 -S-, methylene or 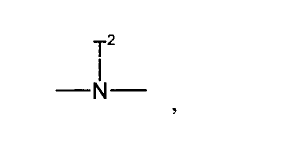 wherein
R and T² have the same meanings as defined above,
Y represents =N- or =CH- and
X represents nitro or cyano.

Especially preferred are active compounds of the formula (I) in which
- R: represents hydrogen, formyl, acetyl, C₁₋₄ alkyl, 2-chloro-5-pyridylmethyl or 2-chloro-5-thiazolylmethyl,
- A: represents hydrogen, C₁₋₄ alkyl, ethylene, trimethylene, or 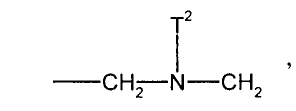 wherein T² represents methyl or ethyl,
- B: represents C₁₋₄ alkyl, -S-R, 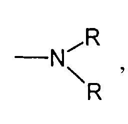 -S-, methylene or 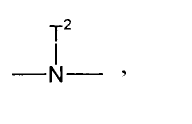 wherein
R and T² have the same meanings as defined above,
Y represents =N-, or =CH-, and
X represents nitro or cyano.

Particularly preferred are active compounds of the formula (I) in which
- R: represents 2-chloro-5-pyridylmethyl or 2-chloro-5-thiazolylmethyl,
- A: represents hydrogen, C₁₋₄ alkyl, ethylene, trimethylene, or 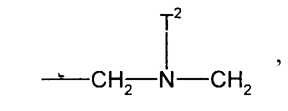 wherein T² represents methyl or ethyl,
- B: represents C₁₋₄ alkyl, -S-R, 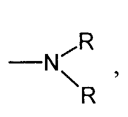 -S-, methylene or 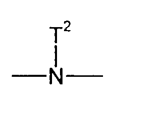 wherein
R and T² have the same meanings as defined above,
Y represents =N- or =CH-, and
X represents nitro or cyano.

As concrete examples of the compounds represented by the general formula (I) to be employed according to the present method of killing noxious insects, the following compounds may be mentioned:
1-(6-chloro-3-pyridylmethyl)-N-nitro-imidazolidine-2-ylideneamine,
N-cyano-N-(2-chloro-5-pyridylmethyl)-N'-methylacetoamidine,
1-[N-(6-chloro-3-pyridylmethyl)-N-ethylamino]-1-methylamino-2-nitroethylene,
1-(2-chloro-5-pyridylmethyl)-5-methyl-2-nitroimino-hexahydro-1,3,5-triazine,
1-(2-chloro-5-thiazoylmethyl)-3,5-dimethyl-2-nitroimino-hexahydro-1,3,5-triazine,
1-(2-chloro-5-pyridylmethyl)-3,5-dimethyl-2-nitroimino-hxaydro-1,3,5-triazine,
1-(2-chloro-5-pyridylmethyl)-2-nitromethylene-imidazolidine,
1-[N-(2-chloro-5-thiazolylmethyl)-N-ethylamino]-methylamino-2-nitroethylene,
3-(2-chloro-5-pyridylmethyl)-2-nitromethylene-thiazolidine,
1-(2-chloro-5-pyridylmethyl)-2-(1-nitro-2-allylthioethylidene)-imidazolidine,
1-(2-chloro-5-pyridylmethyl)-2-(1-nitro-2-ethylthioethylidene)-imidazolidine,
1-(2-chloro-5-pyridylmethyl)-2-(1-nitro-2-β-methylallylthioethylidene)imidazolidine,
methyl-[[3-(2-chloro-5-pyridylmethyl)-1-methyl-2-nitro]-guanidinoformate,
1-(2-chloro-5-pyridylmethylamino)-1-methylthio-2-nitroethylene,
1-(2-chloro-5-pyridylmethylamino)-1-methylamino-2-nitroethylene,
1-(2-chloro-5-pyridylmethyl)-3-nitro-2-methylisothiourea,
3-(2-chloro-5-pyridylmethyl)-1-methyl-2-nitroguanidine,
1-(2-chloro-5-pyridylmethylamino)-1-dimethylamino-2-nitroethylene,
1-[N-(2-chloro-5-pyridylmethyl)-N-methylamino]-1-methylamino-2-nitroethylene,
1-[N-(2-chloro-5-pyridylmethyl)-N-methylamino]-1-dimethylamino-2-nitroethylene,
3-(2-chloro-5-pyridylmethyl)-1,1-dimethyl-2-nitroguanidine,
1-(2-chloro-5-pyridylmethylamino)-1-ethylamino-2-nitroethylene,
1-amino-1-[N-(2-chloro-5-pyridylmethyl)-N-methylamino]-2-nitroethylene,
3-(2-chloro-5-pyridylmethyl)-1,3-dimethyl-2-nitroguanidine,
3-(2-chloro-5-pyridylmethyl)-1,1,3-trimethyl-2-nitroguanidine,
1-amino-1-[N-(2-chloro-5-pyridylmethyl)-N-ethylamino]-2-nitroethylene,
1-[N-(2-chloro-5-pyridylmethyl)-N-ethylamino]-1-methylamino-2-nitroethylene,
1-[N-(2-chloro-5-pyridylmethyl)-N-n-propylamino]-1-methylamino-2-nitroethylene,
1-[N-(chloro-5-pyridylmethyl)-N-ethylamino]-1-ethylamino-2-nitroethylene, and
3-(2-chloro-5-pyridylmethyl)-3-ethyl-1-methyl-2-nitroguanidine,
and so on.

The above-exemplified compounds are no more the representative examples of the compounds represented by the general formula (I), which, therefore, should not be taken as limiting the method of killing noxious insects according to the present invention.

As concrete examples of fruit vegetables, flowers and ornamental plants to be treated according to the present invention may be mentioned fruit vegetable such as eggplant, cucumber, tomato, melon, water melon, green pepper, hop, and so on, and flowers and ornamental plants such as chrysanthemum, rose, and so on.

As concrete examples of noxious insects to be effectively and assuredly controlled according to the method of the present invention may be mentioned Homoptera represented by aphids such as cotton aphid (Aphis gossypii), Green peach aphid (Myzus persicae), etc., and Thysanoptera represented by Minamikiiro Azamiuma (Thrips palmi Karny).

However, the method of killing noxious insects according to the present invention is not limited to the above-mentioned noxious insects but can widely be applied to the controlling of insects damaging vegetables and horticultural crops of flowers and ornamental plants in general.

The effective dosage of the active component according to the method of the present invention is in the range of 2.0 mg to 7.0 mg, preferably 3.0 mg to 6.0 mg per plant body but it may be suitably varied depending on the growth conditions of the plants under cultivation and the degree of insect infestation.

In applying the method according to the present invention onto the plants to be treated, with the pair of pliers the pinching surfaces of which were previously coated with the active compound represented by the general formula (I) pressure is applied outside onto and around the stalks and/or stems of fruit vegetables, flowers and orgamental plants, thereby making the surfaces of said stalks and/or stems forcibly absorb the active compound.

The materials from which the pair of pliers of the present invention are made include iron, aluminium, plastics, hard rubber, and like materials so far as they can achieve the method of the present invention.

As formulations of the active compouns represented by the general formula (I) according to the present method may be mentioned solutions, emulsions, suspensions, liquid and micro-capsules and so on.

These formulations may be produced in a known manner, for example, by mixing the active compounds with liquid diluents or surface active agents. In the case of using water, organic solvents can, for example, also be used as auxiliary solvents.

As liquid diluents can be mentioned, in general, aromatic hydrocarbons, such as xylene, toluene and alkyl naphthalenes, chlorinated aromatic or chlorinated aliphatic hydrocarbons, such as chlorobenzenes, chloroethylenes and methylene chloride, aliphatic or alicyclic hydrocarbons, such as cyclohexane or paraffins, for example, mineral oil fractions, alcohols, such as butanol or glycol as well as their ethers and esters, ketones, such as acetone, methyl ethyl ketone, methyl isobutyl ketone or cyclohexanone, etc., or strongly polar solvents, such as dimethylformamide and dimethylsulfoxide, as well as water.

As surface active agents may be mentioned non-ionic and anionic surface active agents, such as polyoxyethylene-fatty acid esters, polyoxyethylene-fatty alcohol ethers, for example, alkylaryl polyglycol ethers, alkylsulfonates, alkylsulfates, arylsulfonates as well as albumin hydrolysis products.

It is possible to use colorants such as inorganic pigments, for example, iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

The formulations, for example, contain from 0.1 to 95 percent by weight of active compound, preferably from 0.5 to 90 percent by weight.

The shaped articles to be employed in the present method may comprise, in addition to the active compounds represented by the general formula (I), other active compounds such as further insecticides, fungicides, acariciden, plant growth regulators, etc., if necessary. These active compounds are suitable if they exhibit systemic action themselves in plant bodies and, as examples, the following chemicals may be mentioned as representatives:
Triazimefon, bitertanol, fenarimol, tebuconazole, prochloraz, triflumizole, pyrifenox, triforine, pefurazoate, hexaconazole, myclobutanil, propiconazole, diniconazole, fenpropimorph, bromuconazole and so on.

Next, the present invention will be concretely explained with reference to the following examples but it should be noted that the scope of the present invention is not limited only to what is described in the examples.

### Example

### Biotest Example:

Compounds under test
- No. 1:: 1-(6-chloro-3-pyridylmethyl)-N-nitro-imidazolidine-2-ylideneamine

### Text Example:

### Control Test on cotton aphid (Aphis gosyppi)

### Test Method:

Eggplants (Ryoma species) each grown to a height of about 50 cm were allowed to be naturally inhabited with cotton aphids having resistances to organic phosphorus compositions and carbamate compositions.

Under such conditions that the adult insects inhabited each of the test plants at a rate of around 110 pieces per plant, a flowable agent containing 20% of the above-mentioned active compound No. 1 was coated onto the forward end of a plier at a predetermined dosage, followed by press treatment therewith on the stalk portion of the plant of a height of about 7 cm from the soil surface. The test plants were allowed to stand at 20°C (±2°C) in a hothouse, and then the number of surviving insects was determined three, eight, fourteen, twenty-one, twenty-eight and thirty-five days, respectively, after the treatment, thus calculating the control effect in % according to the following equation.

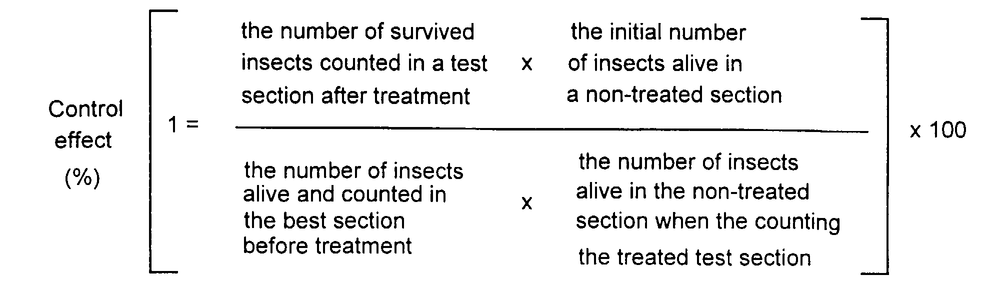

The result of the test is shown in Table 1

**Table 1**

| Concentration of the active component mg/plant body | Control Effect (%) | | | | | | |
|---|---|---|---|---|---|---|---|
| | Days after treatment | | | | | | |
| | 0 | 3 | 8 | 14 | 21 | 28 | 35 |
| 3 | - | 97.5 | 100 | 98.5 | 98 | 89 | 68.5 |
| 6 | - | 98.5 | 100 | 98 | 98 | 87.5 | 78.5 |
| Comparison Spray treatment | - | 99.5 | 100 | 95.5 | 82.5 | 0 | 0 |
| Non treatment | Number of insects | | | | | | |
| | 110 | 307 | 904 | 1697 | 1459 | 652 | 303 |
| Remark: In "Spray treatment", the same active compound was used in a concentration of 50 ppm. | | | | | | | |

Likewise the above-mentioned test example, a test was carried out on eggplants each having a height of about 1 m, the thus obtained results being shown in Table 2.

**Table 2**

| Concentration of the active component mg/plant body | Control Effect (%) | | | | | |
|---|---|---|---|---|---|---|
| | Days after treatment | | | | | |
| | 0 | 3 | 7 | 14 | 21 | 28 |
| 3 | - | 51.5 | 98.5 | 98.5 | 95 | 88 |
| 6 | - | 56.5 | 97.5 | 97.5 | 95 | 91.5 |
| comparison spray treatment | - | 98.5 | 99.5 | 97.5 | 89 | 64 |
| Non treatment | Number of insects (per thirty leaves) | | | | | |
| | 561 | 1546 | 3431 | 10936 | 21018 | 17867 |

## Claims

1. A method of controlling insects infesting fruit vegetables, flowers and ornamental plants, which comprises applying pressure from outside onto and around their stalks and/or stems with the concave pinching surfaces of a pair of pliers which have been previously coated with an active compound of the general formula 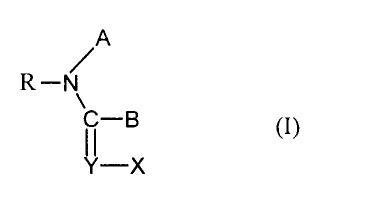 wherein
R represents hydrogen, acyl, alkyl or optionally substituted heteroarylalkyl,
A represents hydrogen, alkyl or a divalent group connected to B,
B represents alkyl, -S-R, 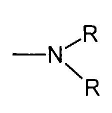 or a divalent group or atom connected to A, wherein
R has the same meaning as mentioned above,
Y represents =N- or 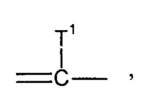 wherein T¹ represents hydrogen or optionally substituted alkyl, and
X represents an electron withdrawing group.

2. The method as claimed in the claim 1, wherein in the general formula (I) representing the active compound
R represents hydrogen, formyl, C₁₋₄ alkylcarbonyl, benzoyl, C₁₋₄ alkylsulfonyl, C₁₋₆ alkyl, or optionally substituted heteroarylmethyl having up to six ring member atoms with at least one being a nitrogen atom and optionally another being a further hetero atom.
A represents hydrogen, C₁₋₆ alkyl, ethylene, trimethylene, or 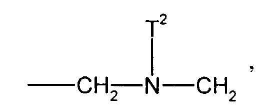 wherein T² represents hydrogen, C₁₋₄ alkyl or C₁₋₄ alkylcarbonyl,
B represents C₁₋₆ alkyl, -S-R, 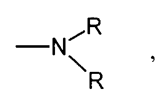 -S-, methylene or 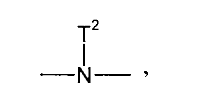 wherein R and T² have the same meanings as defined above,
Y represents =N- or =CH- and
X represents nitro or cyano.

3. The method as claimed in the claim 1, wherein in the general formula (I) representing the active compound,
R represents hydrogen, formyl, acetyl, C₁₋₄ alkyl, 2-chloro-5-pyridylmethyl or 2-chloro-5-thiazolylmethyl,
A represents hydrogen, C₁₋₄ alkyl, ethylene, trimethylene, or 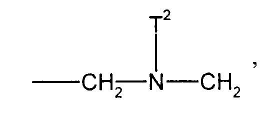 wherein T² represents methyl or ethyl,
B represents C₁₋₄ alkyl, -S-R, 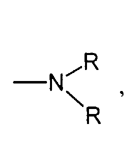 -S-, methylene or 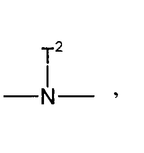 wherein
R and T² have the same meanings as defined above.
Y represents =N-, or =CH-, and
X represents nitro or cyano.

4. The method as claimed in the claim 1, wherein in the general formula (I) representing the active compound,
R represents 2-chloro-5-pyridylmethyl or 2-chloro-5-thiazolylmethyl,
A represents hydrogen, C₁₋₄ alkyl, ethylene, trimethylene, or 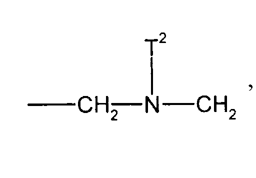 wherein T² represents methyl or ethyl,
B represents C₁₋₄ alkyl, -S-R , 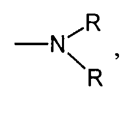 -S-, methylene or 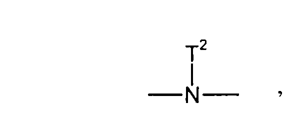 , wherein R and T² have the same meanings as defined above,
Y represents =N- or =CH-, and
X represents nitro or cyano.

## Patentansprüche

1. Verfahren zur gezielten Bekämpfung von Insekten, die Fruchtgemüse, Blumen und Zierpflanzen heimsuchen, wobei man Druck von aussen auf und um deren Stengel und/oder Stämme mit den konkaven Kneifflächen einer Zange ausübt, welche vorher mit einer Wirkverbindung der allgemeinen Formel überzogen worden sind: 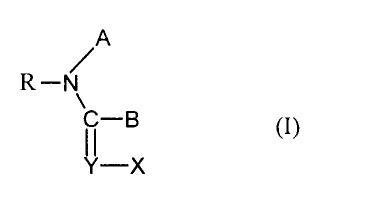 worin gilt:
R stellt Wasserstoff, einen Acyl-, Alkyl- oder einen gegebenenfalls substituierten Heteroarylalkylrest dar,
A stellt Wasserstoff, einen Alkylrest oder eine mit B verbundene zweiwertige Gruppe dar,
B stellt einen Alkylrest, -S-R, 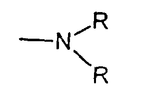 oder eine zweiwertige Gruppe oder ein Atom dar, die mit A verbunden sind, worin R die gleiche Bedeutung wie oben hat,
Y stellt =N- oder 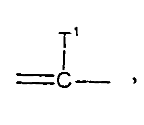 dar,
worin T¹ Wasserstoff oder einen gegebenenfalls substituierten Alkylrest darstellt, und
X stellt eine Elektronen abziehende Gruppe dar.

2. Verfahren gemäß Anspruch 1, wobei in der allgemeinen Formel (I), die die Wirkverbindung darstellt, gilt:
R stellt Wasserstoff, Formyl-, C₁₋₄-Alkylcarbonyl, Benzoyl, C₁₋₄-Alkylsulfonyl, C₁₋₆-Alkyl oder einen gegebenenfalls substituierten Heteroarylmethylrest mit bis zu sechs Ringatomen dar, von denen mindestens eines ein Stickstoffatom und gegebenenfalls ein anderes ein weiteres Heteroatom sind,
A stellt Wasserstoff, einen C₁₋₆-Alkylrest, Ethylen, Trimethylen oder 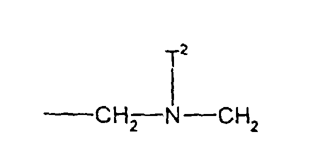 dar, worin T² einen C₁₋₄-Alkyl-oder C₁₋₄-Alkylcarbonylrest darstellt,
B stellt einen C₁₋₄-Alkylrest, -S-R, Methylen oder 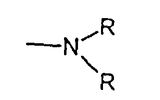 -S- , 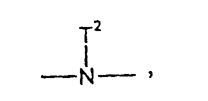 dar, worin R und T² die gleiche Bedeutung wie oben haben,
Y stellt =N- oder =CH- dar, und
X stellt eine Nitro- oder Cyanogruppe dar.

3. Verfahren gemäß Anspruch 1, wobei in der allgemeinen Formel (I), die die Wirkverbindung darstellt, gilt:
R stellt Wasserstoff, Formyl-, Acetyl, C₁₋₄-Alkyl, 2-Chlor-5-pyridylmethyl- oder einen 2-Chlor-5-thiazolylmethylrest dar,
A stellt Wasserstoff, einen C₁₋₄-Alkylrest, Ethylen, Trimethylen oder 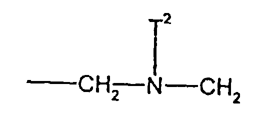 dar, worin T² einen Methyl- oder Ethylrest darstellt,
B stellt einen C₁₋₄-Alkylrest, -S-R, Methylen oder 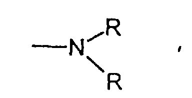 -S- , 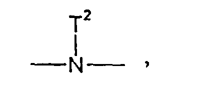 dar, worin R und T² die gleiche Bedeutung wie oben haben,
Y stellt =N- oder =CH- dar, und
X stellt eine Nitro- oder Cyanogruppe dar.

4. Verfahren gemäß Anspruch 1, wobei in der allgemeinen Formel (I), die die Wirkverbindung darstellt, gilt:
R stellt einen 2-Chlor-S-pyridylmethyl- oder 2-Chlor-5-thiazolylmethylrest dar,
A stellt Wasserstoff, einen C₁₋₄-Alkylrest, Ethylen, Trimethylen oder 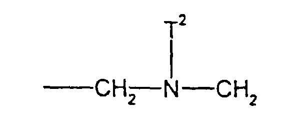 dar, worin T² einen Methyl- oder Ethylrest darstellt,
B stellt einen C₁₋₄-Alkylrest, -S-R, 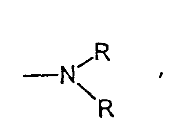 -S- , Methylen oder 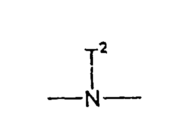 dar, worin R und T² die gleiche Bedeutung wie oben haben,
Y stellt =N- oder =CH- dar, und
X stellt eine Nitro- oder Cyanogruppe dar.

## Revendications

1. Procédé de lutte contre les insectes infestant les fruits, les légumes, les fleurs et les plantes d'agrément, qui comprend le fait d'exercer une pression depuis l'extérieur sur et autour des tiges et/ou des queues de ces plantes et de ces fruits avec les surfaces de pincement concaves d'une paire de pinces, qui ont été enduites au préalable d'un composé actif répondant à la formule générale 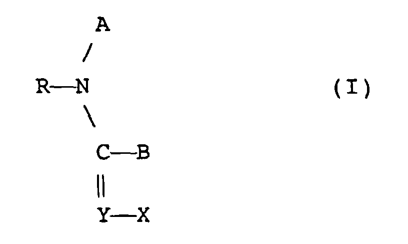 dans laquelle
R représente un atome d'hydrogène, un groupe acyle, un groupe alkyle ou un groupe hétéroarylalkyle le cas échéant substitué,
A représente un atome d'hydrogène, un groupe alkyle ou un groupe divalent relié à B,
B représente un groupe alkyle, un groupe -S-R, un groupe 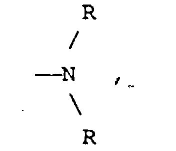 ou un groupe divalent ou un atome relié à A, où
R a la même signification que celle indiquée ci-dessus,
Y représente =N- ou un groupe 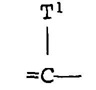 où T¹ représente un atome d'hydrogène ou un groupe alkyle le cas échéant substitué, et
X représente un groupe qui attire les électrons.

2. Procédé selon la revendication 1, dans lequel, dans la formule générale (I) représentant le composé actif,
R représente un atome d'hydrogène, un groupe formyle, un groupe alkyl(en C₁-C₄)carbonyle, un groupe benzoyle, un groupe alkyl(en C₁-C₄)sulfonyle, un groupe alkyle en C₁-C₆ ou un groupe hétéroarylméthyle le cas échéant substitué possédant jusqu'à six atomes nucléaires dont au moins un représente un atome d'azote et le cas échéant un autre représente un hétéroatome supplémentaire,
A représente un atome d'hydrogène, un groupe alkyle en C₁-C₆, un groupe éthylène, un groupe triméthylène ou un groupe 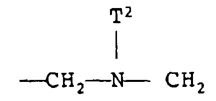 où T² représente un atome d'hydrogène, un groupe alkyle en C₁-C₄ ou un groupe alkyl(en C₁-C₄)carbonyle,
B représente un groupe alkyle en C₁-C₆, un groupe -S-R, un groupe 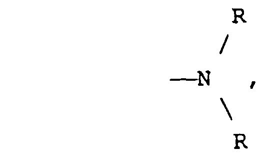 un atome de soufre, un groupe méthylène ou un groupe 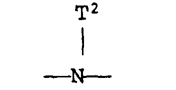 où R et T² ont les mêmes significations que celles indiquées ci-dessus,
Y représente =N- ou =CH- et
X représente un groupe nitro ou un groupe cyano.

3. Procédé selon la revendication 1, dans lequel, dans la formule générale (I) représentant le composé actif,
R représente un atome d'hydrogène, un groupe formyle, un groupe acétyle, un groupe alkyle en C₁-C₄, un groupe 2-chloro-5-pyridylméthyle ou un groupe 2-chloro-5-thiazolylméthyle,
A représente un atome d'hydrogène, un groupe alkyle en C₁-C₄, un groupe éthylène, un groupe triméthylène ou un groupe 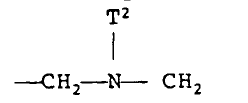 où T² représente un groupe méthyle ou un groupe éthyle,
B représente un groupe alkyle en C₁-C₄, un groupe -S-R, un groupe 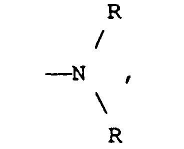 un atome de soufre, un groupe méthylène ou un groupe 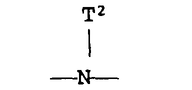 où R et T² ont les mêmes significations que celles indiquées ci-dessus,
Y représente =N- ou =CH- et
X représente un groupe nitro ou un groupe cyano.

4. Procédé selon la revendication 1, dans lequel, dans la formule générale (I) représentant le composé actif,
R représente un groupe 2-chloro-5-pyridylméthyle ou un groupe 2-chloro-5-thiazolylméthyle,
A représente un atome d'hydrogène, un groupe alkyle en C₁-C₄, un groupe éthylène, un groupe triméthylène ou un groupe 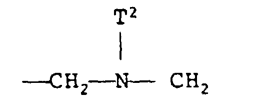 où T² représente un groupe méthyle ou un groupe éthyle,
B représente un groupe alkyle en C₁-C₄, un groupe -S-R, un groupe 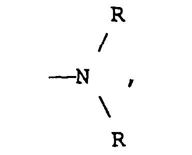 un atome de soufre, un groupe méthylène ou un groupe 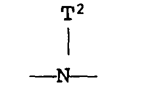 où R et T² ont les mêmes significations que celles indiquées ci-dessus,
Y représente =N- ou =CH- et
X représente un groupe nitro ou un groupe cyano.
